# EUROPEAN PATENT APPLICATION

(11) **EP 3 991 569 A1**
(43) Date of publication of application: **04.05.2022**
(21) Application number: 20833396.3
(22) Date of filing: 25.06.2020
(51) Int. Cl.: A23L 7/109

(54) **BUNDLED PASTAS**

(30) Priority: 28.06.2019 JP 2019121566
(71) Applicant: Nisshin Foods Inc., Tokyo 101-8441 (JP)
(72) Inventor: FUJII Tomoyuki, Saitama 3568511 (JP); SAKURAMA Yuki, Saitama 3568511 (JP); ASAHINA Kenta, Saitama 3568511 (JP); ASAMURA Taro, Saitama 3568511 (JP)
(74) Representative: Casalonga
(86) International application number: PCT/JP2020/024976
(87) International publication number: WO 2020/262521

(57) **Abstract**

The bundled pastas (1) according to the present invention comprise a plurality of dry spaghetti lines (11) each having a diameter of 1.0-3.0 mm inclusive and a length of 12-20 cm inclusive and at least one bundling band (12) with which the plurality of dry spaghetti lines (11) are bundled, wherein the total mass of the plurality of dry spaghetti lines (11) bundled with the at least one bundling band (12) is 50-150 g inclusive.

## Description

### BACKGROUND OF THE INVENTION

The present invention relates to bundled pasta having a plurality of dried spaghetti noodles being bundled with a bundling band.

### BACKGROUND ART

A rough standard of the eating amount of noodles such as Japanese somen noodles or spaghetti noodles is generally, for example, 100 g per serving in terms of the mass of the noodles. When boiled, dried noodles absorb water, resulting in boiled noodles weighing about 220 g to about 280 g. A tool called a pasta measure has been created to measure the amount of such dried noodles, e.g., dried spaghetti noodles; one example thereof is a plate bored with a hole having a diameter of about 2.3 cm, which is designed such that the number of dried spaghetti noodles exactly fitting in the hole is to be 100 g corresponding to one serving. Besides, products formed by bundling a specified mass, e.g., 50 g or 100 g of dried noodles such as Japanese somen noodles or spaghetti noodles at the middle of the dried noodles are currently on the market as bundled noodles. Bundled noodles thus bundled on a specified mass basis have a slim and smart shape as a whole and therefore look high-class, thus contributing to an improved added value of dried noodle products.

Accordingly, there has been proposed a technique relating to a bundling system for bundling dried noodles as disclosed in Patent Literature 1 and a bundling band for dried noodles that has an additional function as disclosed in Patent Literature 2. Aside from that, there is a problem in that, among various dried noodles, surfaces of dried spaghetti noodles are particularly smooth and slippery compared to other types of dried noodles, and it is difficult to apply suitable tension to a bundling band when winding the bundling band around a certain amount of dried spaghetti noodles to produce bundled pasta. A device addressing this problem has been proposed in Patent Literature 3.

### CITATION LIST

### PATENT LITERATURE

Patent Literature 1: JP 2002-347711 A
Patent Literature 2: JP 3189640 U
Patent Literature 3: WO 2014/192409

### SUMMARY OF INVENTION

### TECHNICAL PROBLEMS

Meanwhile, food diversification has proceeded in recent years, and in food cooking at home, chances to cook each serving on an individual basis are increasing. In general, when noodles are boiled, it is preferable to boil noodles with a large amount of hot water using a deep pot having a large opening in order to prevent generation of unevenly boiled portions; however, dried noodles usually have a length of approximately not less than 24 cm and not more than 34 cm, and it is wasteful to prepare a pot that is large enough to receive dried noodles having such length every time one cooks for one serving at home. To cope with it, when dried noodles are boiled in an amount corresponding to about one serving, it is conceivable to use a pot with a small volume and a small opening in proportion to the amount of the dried noodles; however, to boil dried noodles in such a small pot, there is required, for example, the operation of putting the dried noodles into hot water in the pot from ends of the noodles first and then bending the portions having been soaked in the hot water and softened such that the remaining portions of the dried noodles can enter the hot water successively. Due to this operation, unevenly boiled portions may be generated, and the cooker may get burned.

Besides, as a product of dried spaghetti noodles, noodles shorter than the typical length that is approximately not less than 24 cm and not more than 34 cm are commercially available. Since the product as above is sold for salad use for example and the amount required each time is usually small, dried spaghetti noodles bundled like one with the typical length for "spaghetti dishes" are not on the market. In addition, when dried spaghetti noodles of short length as above are measured with a conventional pasta measure, since the mass of each dried spaghetti noodle is smaller than that of a dried spaghetti noodle with the typical length, the amount of dried spaghetti noodles measured and obtained should be small for one serving of spaghetti.

Therefore, the present inventors have attempted to produce bundled pasta having a predetermined amount of dried spaghetti noodles of short length being bundled. However, when dried spaghetti noodles of short length in an amount corresponding to about one serving are bundled, since the length of each dried spaghetti noodle is short, the number of the dried spaghetti noodles are to be large compared to conventional bundled pasta having dried spaghetti noodles with the typical length being bundled, resulting in thick bundled pasta as a whole. Accordingly, even when bundled pasta is produced by, for instance, using a stretch bundling band or winding a bundling band around a bundle of dried spaghetti noodles while applying sufficient tension to the bundling band, some dried spaghetti noodles easily slip off the produced bundled pasta. In particular, when bundled pasta is lifted up in cooking, some dried spaghetti noodles slip off the bundled pasta and scatter, disadvantageously.

An object of the invention is to provide bundled pasta with which, even when dried spaghetti noodles of short length are bundled with a bundling band, slipping off and scattering of some of the dried spaghetti noodles can be minimized, which makes it possible to easily obtain a certain amount of the dried spaghetti noodles, and which facilitates boiling for one serving even with a small pot.

### SOLUTION TO PROBLEMS

It is characterized by comprising: a plurality of dried spaghetti noodles each having a diameter of not less than 1.0 mm and not more than 3.0 mm and a length of not less than 12 cm and not more than 20 cm; and at least one bundling band used to bundle the plurality of dried spaghetti noodles, wherein the total mass of the plurality of dried spaghetti noodles bundled with the at least one bundling band is not less than 50 g and not more than 150 g.

Preferably, in bundled pasta, the number of the at least one bundling band is two or three.

Preferably, the length of the plurality of dried spaghetti noodles is not less than 14 cm and not more than 19 cm.

The total mass of the plurality of dried spaghetti noodles is preferably not less than 70 g and not more than 130 g and more preferably not less than 85 g and not more than 115 g.

A cross section of each of the plurality of dried spaghetti noodles may have a circular or elliptical main profile, the cross section being perpendicular to a noodle string direction of the plurality of dried spaghetti noodles.

Preferably, each of the plurality of dried spaghetti noodles has at least one groove extending along its noodle string direction.

In a cross section of each of the plurality of dried spaghetti noodles which cross section is perpendicular to the noodle string direction of the plurality of dried spaghetti noodles, an area ratio A₁/A₀ of a total area A₁ of the at least one groove to the area A₀ of the cross section which is determined assuming that the at least one groove does not exist is preferably not less than 0.25 and not more than 0.50 and more preferably not less than 0.32 and not more than 0.42.

### ADVANTAGEOUS EFFECTS OF INVENTION

The present invention provides bundled pasta comprising: a plurality of dried spaghetti noodles each having a diameter of not less than 1.0 mm and not more than 3.0 mm and a length of not less than 12 cm and not more than 20 cm; and at least one bundling band used to bundle the plurality of dried spaghetti noodles, wherein the total mass of the plurality of dried spaghetti noodles bundled with the at least one bundling band is not less than 50 g and not more than 150 g. Therefore, even when dried spaghetti noodles of short length are bundled with a bundling band, it is possible to minimize slipping off and scattering of some of the dried spaghetti noodles, easily obtain a certain amount of the dried spaghetti noodles, and facilitate boiling for one serving even with a small pot.

### BRIEF DESCRIPTION OF DRAWINGS

[FIG. 1] FIG. 1 is a perspective view of bundled pasta according to an embodiment of the invention.
[FIG. 2] FIG. 2 is a front view of the bundled pasta according to the embodiment of the invention.
[FIG. 3] FIG. 3 is a side view of the bundled pasta according to the embodiment of the invention.
[FIG. 4] FIG. 4 is a front view of bundled pasta according to a modification of the embodiment of the invention.
[FIG. 5] FIG. 5 is a front view of bundled pasta according to another modification of the embodiment of the invention.
[FIG. 6] FIG. 6 is a perspective view of a spaghetti noodle according to a still another modification of the embodiment of the invention.

### DESCRIPTION OF EMBODIMENTS

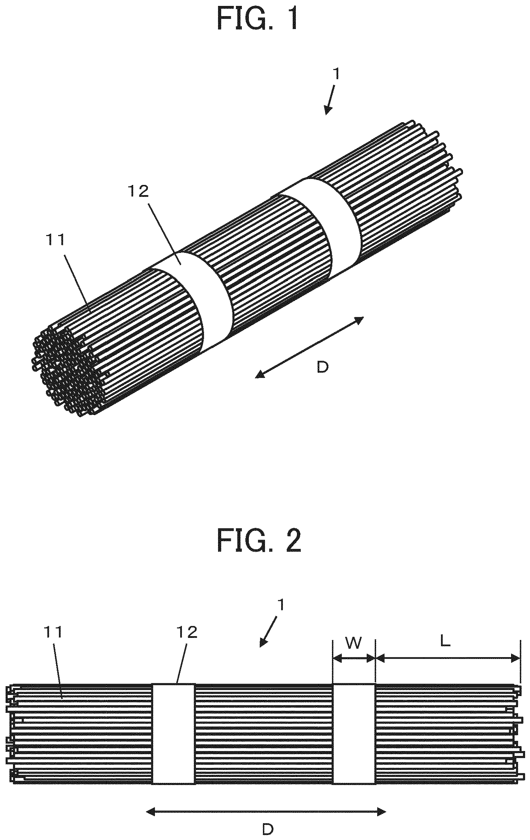

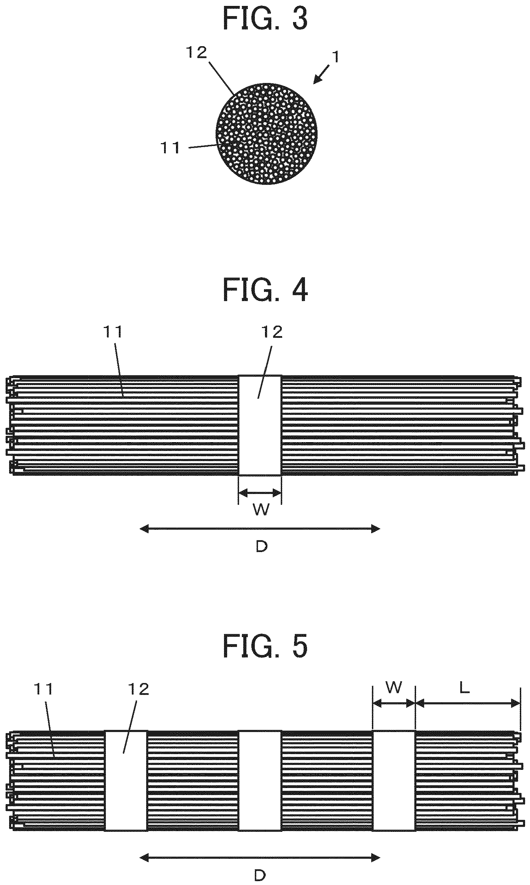

As shown in FIGS. 1 and 2, bundled pasta 1 according to an embodiment of the invention includes a plurality of dried spaghetti noodles 11 linearly extending along a noodle string direction D and bundling bands 12 bundling the dried spaghetti noodles 11. In the example shown in FIGS. 1 and 2, the dried spaghetti noodles 11 are bundled with two bundling bands 12 spaced away from each other. As shown in the side view of FIG. 3, since the dried spaghetti noodles 11 are bundled with the bundling bands 12, the profile of the bundled pasta 1 in the circumferential direction is a substantially circular shape, and the bundled pasta 1 has a substantially cylindrical shape as a whole.

Hereinafter, the dried spaghetti noodles 11 in the bundled pasta 1 are defined as extending along the same noodle string direction D for ease of description.

Dried spaghetti noodles in the invention refer to those typically called long pasta, which is obtained by extruding, through small holes, a dough formed from raw material powder containing wheat flour to shape the dough into a noodle string form, followed by drying. As the main ingredient of raw material powder of dried spaghetti noodles, one kind of wheat flour derived from durum wheat or common wheat may be used alone, or plural kinds of wheat flours may be mixed for use. This wheat flour may contain semolina. For raw materials of dried spaghetti noodles, an ingredient commonly used as a raw material of dried spaghetti noodles may be mixed in addition to wheat flour, and examples of the ingredient include: grain flours other than wheat flours; starches; sugars; salt; seasonings; and thickeners. Water is added to such raw materials, the resulting mixture is kneaded to produce a dough, and then the produced dough is, for instance, extruded from a die provided with small holes by means of a high-pressure extruder to shape noodle strings, thus producing spaghetti noodles.

Noodle strings may be shaped by, for instance, repeating rolling of the dough and cutting the rolled dough as in cases of using a pasta machine for small quantity production. In the case of small quantity production, however, noodle strings tend to be nonuniform in thickness and size, so that it is preferable to adopt extrusion shaping described above.

Spaghetti noodles thus shaped are dried, thereby producing the dried spaghetti noodles 11. Spaghetti noodles right after being shaped from a dough are soft and therefore easily deform, but when dried, spaghetti noodles can have a fixed shape. Spaghetti noodles can be dried by an ordinary method, and one adoptable method is, for example, a method in which a plurality of spaghetti noodles before being dried are placed at spaced intervals so as not to adhere to one another and dried in a constant temperature room. Typical drying conditions are, approximately, 18 to 28 hours at 40°C to 60°C, 8 to 11 hours at 60°C to 84°C, or 2 to 7 hours at 84°C or higher, for example. In this process, for instance, spaghetti noodles are hung on a pole or the like and dried such that the noodles can have a linear shape in order to produce the bundled pasta 1 of the invention,

A cross section of the dried spaghetti noodle 11 which cross section is perpendicular to the noodle string direction D is not particularly limited in shape and, for instance, may have a circular or elliptical shape. The shape of the cross section of the dried spaghetti noodle 11 may be suitably designed utilizing, for instance, the shape of small holes formed in a die used in extrusion shaping of a dough of the dried spaghetti noodles 11. The dried spaghetti noodles 11 of various cross-sectional shapes are produced, such as a quadrangular shape, a cloud-like shape, a domical shape, a star shape and a doughnut shape.

The cross section of the dried spaghetti noodle 11 which cross section is perpendicular to the noodle string direction D has a diameter of not less than 1.0 mm and not more than 3.0 mm, preferably not less than 1.3 mm and not more than 2.6 mm. The diameter of the cross section of the dried spaghetti noodle 11 in the invention refers to the length of the maximum line extending across the cross section of the dried spaghetti noodle 11.

The length of the dried spaghetti noodle 11 in the noodle string direction D is not less than 12 cm and not more than 20 cm. In the case where the dried spaghetti noodles 11 have a length of less than 12 cm, this may cause the following problems: When the bundled pasta 1 is produced with the dried spaghetti noodles 11 in an amount corresponding to about one serving, the bundled pasta 1 is to be thick as a whole, so that some dried spaghetti noodles 11 easily slip off; the surfaces of the spaghetti noodles tend to be roughened because the spaghetti noodles easily move in a hot water while being boiled; and it is hard to obtain a voluminous feel because of too short length of boiled spaghetti noodles. In the case where the dried spaghetti noodles 11 have a length of more than 20 cm, when a cooker tries to boil the dried spaghetti noodles 11 with a small pot for one person, the dried spaghetti noodles 11 are too long for the size of the pot, which makes it difficult to put the dried spaghetti noodles 11 in the pot, and furthermore, it is difficult to boil water in an amount sufficient to boil the dried spaghetti noodles 11 with the small pot. Accordingly, there arises a problem in that boiling of the dried spaghetti noodles 11 is not easily done.

In the meantime, spaghetti noodles are usually wound around a fork or the like and eaten. As such a fork, a fork having short and thick prongs at its end, such as a fork for children, is commercially available. Besides, conventionally, dried spaghetti noodles having a length of not less than 24 cm and not more than 34 cm in the noodle string direction are commercially available. When dried spaghetti noodles having such length are boiled and eaten with a fork having short and thick prongs at its end, such as a fork for children, the spaghetti noodles are so long that they may slip off the fork during a meal. Since the dried spaghetti noodles 11 used in the bundled pasta 1 of the invention have a length of not less than 12 cm and not more than 20 cm in the noodle string direction D, spaghetti obtained by boiling and cooking the dried spaghetti noodles 11 is easy to eat even in the case of using, particularly, a fork having short and thick prongs at its end, such as a fork for children.

From these points of view, the length of the dried spaghetti noodles 11 in the noodle string direction D is more preferably not less than 14 cm and not more than 19 cm.

The total mass of the dried spaghetti noodles 11 used in the bundled pasta 1 is not less than 50 g and not more than 150 g. When the total mass of the dried spaghetti noodles 11 used in the bundled pasta 1 is less than 50 g, the bundled pasta 1 is to be too thin as a whole, so that the dried spaghetti noodles 11 are easily broken when the bundling band 12 is removed from the bundled pasta 1, and in addition, it is troublesome to adjust the amount of the dried spaghetti noodles 11 to that for one serving. When the total mass of the dried spaghetti noodles 11 used in the bundled pasta 1 is more than 150 g, the bundled pasta 1 is to be too thick as a whole, so that some dried spaghetti noodles 11 easily slip off the bundled pasta 1 and may be broken, or scattered and lost.

From that point of view, the total mass of the dried spaghetti noodles 11 used in the bundled pasta 1 is preferably not less than 70 g and not more than 130 g and more preferably not less than 85 g and not more than 115 g.

The bundling band 12 is used to bundle the dried spaghetti noodles 11 into one bundle. The bundling band 12 is not limited as long as it can hold the dried spaghetti noodles 11 in the form of a bundle to prevent the dried spaghetti noodles 11 from being scattered and lost, and the bundling band 12 may have the shape of a string, a sheet or the like. The material of the bundling band 12 is not particularly limited, and examples of usable materials include paper materials, rubber materials, resin materials such as plastic and polyethylene, and edible materials such as gelatin and agar.

As shown in FIG. 2, the width W of the bundling band 12, i.e., the length of the bundling band 12 in the noodle string direction D of the bundled pasta 1 is approximately not less than 5.0 mm and not more than 25.0 mm. When the width W of the bundling band 12 is less than 5.0 mm, the dried spaghetti noodles 11 may locally receive a stress when bundled, and are sometimes easily broken. When the width W of the bundling band 12 is more than 25.0 mm, it is further troublesome to remove the bundling band 12 from the bundled pasta 1 in cooking, and in addition, since a stress tends to be exerted on an end or therearound of the bundling band 12 when the bundling band 12 is removed from the bundled pasta 1, the dried spaghetti noodles 11 are sometimes easily broken.

The length of the bundling band 12, i.e., the length of the bundling band 12 in the circumferential direction of the bundled pasta 1 is not particularly limited as long as it is long enough for the bundling band 12 to be wound around a bundle of the dried spaghetti noodles 11 and the bundling band 12 can be fixed in position by adhering an end, in the length direction, of the bundling band 12 to itself or by other means.

Further, as shown in FIG. 2, a distance L from an end of the bundled pasta 1 to the bundling band 12 in the noodle string direction D is preferably 3.0 cm or more for the purpose of preventing the bundling band 12 from moving toward the end of the bundled pasta 1 and slipping off the bundled pasta 1 while the cooker is carrying the bundled pasta 1 or doing something with the bundled pasta 1.

Note that ends of the dried spaghetti noodles 11 corresponding to an end of the bundled pasta 1 may be nonuniformly situated at different positions in the noodle string direction D, as shown in FIG. 2. In this case, for instance, the average position of the ends of the dried spaghetti noodles 11 in the noodle string direction D is regarded as the position of the end of the bundled pasta 1, and the distance from this position to the bundling band 12 can be defined as the distance L.

While the bundled pasta 1 having two bundling bands 12 is illustrated as an example in FIGS. 1 and 2, it suffices if the bundled pasta 1 has at least one bundling band 12.

For instance, as shown in FIG. 4, the bundled pasta 1 may have only one bundling band 12 in its middle portion. While the cooker's trouble to remove the bundling band 12 is reduced in this case, some dried spaghetti noodles 11 may easily slip off the bundled pasta 1 depending on the mass of the bundled pasta 1 and the width W of the bundling band 12. Therefore, it is preferable for the bundled pasta 1 to have two or more bundling bands 12. The trouble of removing the bundling bands 12 increases with increasing number of the bundling bands 12 on the bundled pasta 1; however, when the bundled pasta 1 has two or three bundling bands 12, removal of the bundling bands 12 is easy enough for the cooker. Therefore, it is more preferable for the bundled pasta 1 to have two or three bundling bands 12. An example of the bundled pasta 1 having three bundling bands 12 is shown in FIG. 5.

As shown in FIGS. 1, 2 and 5, when the bundled pasta 1 has two or more bundling bands 12, the bundling bands 12 are preferably arranged in substantially regular intervals in the noodle string direction D.

Meanwhile, conventionally, there is commercially available bundled pasta obtained by bundling spaghetti noodles having a length of approximately not less than 24 cm and not more than 34 cm in an amount corresponding to about one serving. With the bundled pasta as above, the spaghetti noodles in an amount corresponding to one serving can be easily cooked; however, it is preferable to boil the spaghetti noodles with a large amount of hot water using a deep pot having a large opening, and this is very troublesome to the cooker. Further, when a cooker tries to boil dried spaghetti noodles having a length of approximately not less than 24 cm and not more than 34 cm with, for example, a small pot for one person, the cooker needs to do, for instance, the operation of putting the dried noodles into hot water in the pot from ends of the noodles first, and then bending the portions having been soaked in the hot water and softened such that the remaining portions of the dried noodles can enter the hot water successively. Due to this operation, unevenly boiled portions may be generated, and the cooker may get burned.

Aside from that, while dried spaghetti noodles having a length shorter than a typical length that is approximately not less than 24 cm and not more than 34 cm are commercially available, such dried spaghetti noodles are sold for salad use for example, the amount required each time is usually small, and accordingly, dried spaghetti noodles bundled like one with the typical length are not on the market. Therefore, when a cooker tries to correctly adjust the amount of dried spaghetti noodles of short length to the amount corresponding to about one serving, great trouble is caused sometimes. To cope with it, the present inventors have attempted to produce bundled pasta having dried spaghetti noodles of short length as above being bundled, but this has a problem in that some dried spaghetti noodles easily slip off the produced bundled pasta.

In the bundled pasta 1 according to the embodiment of the invention, the bundled pasta 1 includes: a plurality of dried spaghetti noodles 11 each having a diameter of not less than 1.0 mm and not more than 3.0 mm and a length of not less than 12 cm and not more than 20 cm; and at least one bundling band 12 used to bundle the plurality of dried spaghetti noodles 11, wherein the total mass of the plurality of dried spaghetti noodles 11 bundled with the at least one bundling band is not less than 50 g and not more than 150 g. Therefore, a cooker can easily obtain a certain amount of dried spaghetti noodles of short length and easily boil the dried spaghetti noodles 11 in an amount corresponding to about one serving while preventing generation of unevenly boiled portions even with a small pot for one person, and in addition, it is possible to minimize slipping off of some dried spaghetti noodles 11 from the bundled pasta 1 and scattering thereof in cooking.

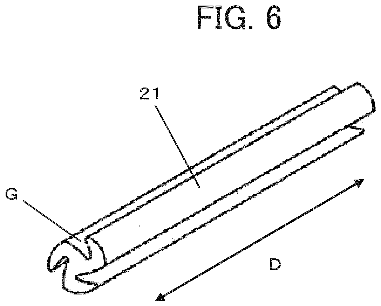

The profile of each dried spaghetti noodle 11 used in the bundled pasta 1 according to the embodiment of the invention is not particularly limited. As the dried spaghetti noodle 11, use may be made of a dried spaghetti noodle 21 provided with grooves G extending along the noodle string direction D as shown in FIG. 6. FIG. 6 shows the example in which three grooves G extending along the noodle string direction D are formed in the dried spaghetti noodle 21.

The number of the grooves G formed in the dried spaghetti noodle 21 is not limited to three and may be one, two, four or more. The shape of the groove G is not particularly limited, and examples of the shape include, in the cross section perpendicular to the noodle string direction D, the shape in which the width of the groove G decreases from the outer periphery toward the inside, the shape in which the width of the groove G increases once in the middle and then decreases from the outer periphery toward the inside, the shape linearly extending from the outer periphery toward the inside, and the shape extending while bending from the outer periphery toward the inside. For the shape of the groove G, for instance, such shapes as those described in JP 2012-115173 A, those described in WO 2017/047636 and those described in WO 2018/025838 may be adopted.

Thus, by using the dried spaghetti noodles 21 each provided with at least one groove G extending along the noodle string direction D in the bundled pasta 1, it is possible to further minimize slipping off of some dried spaghetti noodles 21 from the bundled pasta 1 and scattering thereof.

Aside from that, in a cross section of the dried spaghetti noodle 21 which cross section is perpendicular to the noodle string direction D, an area ratio A₁/A₀ of a total area A₁ of at least one groove G to an area A₀ of the cross section which is determined assuming that the groove G does not exist is preferably not less than 0.25 and not more than 0.50 and more preferably not less than 0.32 and not more than 0.42. The area ratio A₁/A₀ within the foregoing range leads to shorter boiling time of the dried spaghetti noodles 21. Now, generally speaking, boiling time of dried spaghetti noodles provided with a groove is short, so that unevenly boiled portions tend to be generated. However, since the dried spaghetti noodles 21 used in the bundled pasta 1 of the invention are shorter than typical dried spaghetti noodles, the whole noodles 21 can be put in hot water at a time even in the case of using a small pot, and this can prevent generation of unevenly boiled portions. Thus, it is particularly advantageous to provide the groove G in a dried spaghetti noodle shorter than a typical dried spaghetti noodle, as in the dried spaghetti noodle 21.

Note that the area ratio A₁/A₀ can be calculated by, for example, taking an optical micrograph of the cross section of the dried spaghetti noodle 21 and subjecting the taken optical micrograph to image processing.

### EXAMPLES

Examples are shown below but the present invention should not be construed as being limited to those examples.

### (Example 1)

To 100 parts by mass of durum semolina, 26 parts by mass of water was incorporated, and the mixture was kneaded to produce a dough. Next a die provided with through-holes used to produce 1.8-mm diameter spaghetti noodles was attached to a pasta production machine, and the kneaded dough was extruded from the die while the pressure was reduced, thereby forming spaghetti noodles. The spaghetti noodles were dried by an ordinary method to obtain dried spaghetti noodles, which were then cut into 12 cm length. The dried spaghetti noodles thus cut were adjusted at their ends and divided such that the total weight of each portion was 100 g. Thereafter, pieces of paper tape with a width W of 10 mm were wound as bundling bands separately at two positions each of which was away from the relevant end of a bundle of the dried spaghetti noodles with a distance L of 3.5 cm as shown in FIG. 2. A 600 g weight was hung from one end, in the length direction, of the paper tape, and while tension was applied to the paper tape, the one end in the length direction was glued on the same paper tape wound around the dried spaghetti noodles, whereby the position of the paper tape was fixed on the outer periphery of the dried spaghetti noodles. Thus, bundled pasta was produced.

### (Example 2)

Bundled pasta was produced in the same manner as in Example 1 except that dried spaghetti noodles had a length of 14 cm.

### (Example 3)

Bundled pasta was produced in the same manner as in Example 1 except that dried spaghetti noodles had a length of 16 cm.

### (Example 4)

Bundled pasta was produced in the same manner as in Example 1 except that dried spaghetti noodles had a length of 18 cm.

### (Example 5)

Bundled pasta was produced in the same manner as in Example 1 except that dried spaghetti noodles had a length of 19 cm.

### (Example 6)

Bundled pasta was produced in the same manner as in Example 1 except that dried spaghetti noodles had a length of 20 cm.

### (Comparative Example 1)

Bundled pasta was produced in the same manner as in Example 1 except that dried spaghetti noodles had a length of 11 cm.

### (Comparative Example 2)

Bundled pasta was produced in the same manner as in Example 1 except that dried spaghetti noodles had a length of 21 cm.

The bundled pasta of each of Examples 1 to 6 and Comparative Examples 1 and 2 thus obtained was evaluated for the following items.

### <Evaluation on slipping off of dried spaghetti noodles>

The bundled pasta was grasped by the thumb and the index finger of the right hand at the position 5 centimeters away from one end of the bundled pasta in the noodle string direction D such that a portion of the bundled pasta on the little finger side was longer, and was held in a horizontal state where the noodle string direction D was the horizontal direction, with the other fingers being lightly put on the bundled pasta. Next, the hand grasping the bundled pasta was slowly rotated such that the end of the bundled pasta on the little finger side went down, and the bundled pasta was held for 5 seconds in a vertical state where the noodle string direction D was the vertical direction. Then the bundled pasta was slowly rotated toward the opposite direction to return to the original horizontal state. This operation was repeated 5 times, and the degree of slipping off of dried spaghetti noodles during the operation was rated according to the following evaluation criteria. Further, this evaluation was made 10 times, and the average of 10 evaluation values was calculated as the final evaluation result.
5: No dried spaghetti noodle slipped off even when the operation was repeated 5 times. Excellent.
4: One or more and five or less dried spaghetti noodles protruded but did not slip off when the operation was repeated 5 times. Good.
3: A dried spaghetti noodle or noodles slipped off when the operation was repeated 5 times, but this was practically no problem.
2: A dried spaghetti noodle or noodles slipped off when the bundled pasta was rotated to the vertical state only 1 time. Poor.
1: Many dried spaghetti noodles slipped off at a time when the bundled pasta was rotated to the vertical state only 1 time. Very poor.

### <Evaluation on cooking handleability>

The bundling bands of the bundled pasta were ripped and removed with fingers. Next, a saucepan with a diameter of about 18 cm and a volume of 1.4 1 was filled with 1.0 1 hot water and put on heat. With the hot water being boiling, the dried spaghetti noodles were put in the hot water and boiled for a predetermined period of time. The degree of handleability in this process was rated according to the following evaluation criteria. Further, this evaluation was made 10 times, and the average of 10 evaluation values was calculated as the final evaluation result.
5: The bundling bands were easily removable because strength could be easily put into fingers to remove the bundling bands, and in addition, it was possible to easily put the dried spaghetti noodles into the saucepan and easily stir the spaghetti noodles during boiling of the noodles. Excellent.
4: It was possible to easily put the dried spaghetti noodles into the saucepan and easily stir the spaghetti noodles during boiling of the noodles. Good.
3: It was slightly difficult to stir the spaghetti noodles during boiling of the noodles because of a large number of the noodles, or the spaghetti noodles moved too much in the hot water so that the surfaces of the noodles were roughened; however, it was possible to easily put the dried spaghetti noodles into the saucepan, and there was practically no problem.
2: It was slightly troublesome to put the dried spaghetti noodles into the saucepan; it was difficult to stir the spaghetti noodles during boiling of the noodles because of a large number of the noodles even though putting the noodles into the pan was easy; or the spaghetti noodles moved too much in the hot water so that the surfaces of the noodles were roughened. Poor.
1: It was troublesome to put the dried spaghetti noodles into the saucepan, and it was difficult to stir the spaghetti noodles during boiling of the noodles because of a large number of the noodles. Very poor.

The results of the above evaluations are shown in Table 1 below.

### [Table 1]

**Table 1**

| | CE 1 | EX 1 | EX 2 | EX 3 | EX 4 | EX 5 | EX 6 | CE 2 |
|---|---|---|---|---|---|---|---|---|
| Length of dried spaghetti noodles (cm) | 11 | 12 | 14 | 16 | 18 | 19 | 20 | 21 |
| Total mass of dried spaghetti noodles (g) | 100 | 100 | 100 | 100 | 100 | 100 | 100 | 100 |
| Number of bundling bands | 2 | 2 | 2 | 2 | 2 | 2 | 2 | 2 |
| Distance L from an end of bundled pasta to a bundling band (cm) | 3.5 | 3.5 | 3.5 | 3.5 | 3.5 | 3.5 | 3.5 | 3.5 |
| Evaluation on slipping off of dried spaghetti noodles | 2.8 | 3.4 | 3.9 | 4.2 | 4.3 | 4.4 | 4.5 | 4.6 |
| Evaluation on cooking handleability | 2.4 | 3.2 | 4.0 | 4.6 | 4.5 | 4.0 | 3.1 | 1.9 |

| | | | | | | | | |
|---|---|---|---|---|---|---|---|---|
| CE: Comparative Example EX: Example | | | | | | | | |

In each of Examples 1 to 6, both the evaluation on slipping off of dried spaghetti noodles and the evaluation on cooking handleability were not less than 3.0, and this demonstrates that there is practically no problem. In particular, in each of Examples 3 to 6, the evaluation on slipping off of dried spaghetti noodles was not less than 4.0. Further, in each of Examples 2 to 5, both the evaluation on slipping off of dried spaghetti noodles and the evaluation on cooking handleability were not less than 4.0, and thus, the excellent results were obtained.

In contrast, in Comparative Example 1, both the evaluation on slipping off of dried spaghetti noodles and the evaluation on cooking handleability were less than 3.0. In Comparative Example 1, the length of the dried spaghetti noodles was 11 cm, and the mass of each dried spaghetti noodle was small; due to this, the number of the dried spaghetti noodles included in the bundled pasta increased although the total mass of the dried spaghetti noodles included in the bundled pasta was 100 g. Accordingly, some dried spaghetti noodles easily slipped off the bundled pasta, and aside from that, the spaghetti noodles moved too much in hot water during boiling of the noodles, so that the surfaces of the noodles tended to be roughened. Those are probably the reasons why both the evaluation on slipping off of dried spaghetti noodles and the evaluation on cooking handleability were less than 3.0.

In Comparative Example 2, the evaluation on cooking handleability was 1.9 while the evaluation on slipping off of dried spaghetti noodles was 4.6. This is probably because, due to the large length of the dried spaghetti noodles, trouble was caused when the dried spaghetti noodles were put into the pan, and in addition, it was difficult to stir the spaghetti noodles during boiling of the noodles.

### (Examples 7 to 12 and Comparative Examples 3 and 4)

Next, bundled pasta of each of Examples 7 to 12 and Comparative Examples 3 and 4 was produced in the same manner as Example 3 except that the mass of the bundled pasta was changed as shown in Table 2, and the bundled pasta thus produced was subjected to the evaluation on slipping off of dried spaghetti noodles and the evaluation on cooking handleability.

### [Table 2]

**Table 2**

| | CE 3 | EX 7 | EX 8 | EX 9 | EX 3 | EX 10 | EX 11 | EX 12 | CE 4 |
|---|---|---|---|---|---|---|---|---|---|
| Length of dried spaghetti noodles (cm) | 16 | 16 | 16 | 16 | 16 | 16 | 16 | 16 | 16 |
| Total mass of dried spaghetti noodles (g) | 40 | 50 | 70 | 85 | 100 | 115 | 130 | 150 | 170 |
| Number of bundling bands | 2 | 2 | 2 | 2 | 2 | 2 | 2 | 2 | 2 |
| Distance L from an end of bundled pasta to a bundling band (cm) | 3.5 | 3.5 | 3.5 | 3.5 | 3.5 | 3.5 | 3.5 | 3.5 | 3.5 |
| Evaluation on slipping off of dried spaghetti noodles | 4.5 | 4.5 | 4.4 | 4.2 | 4.2 | 4.0 | 3.9 | 3.6 | 2.8 |
| Evaluation on cooking handleability | 2.4 | 3.0 | 3.7 | 4.4 | 4.6 | 4.2 | 3.6 | 3.3 | 2.3 |

| | | | | | | | | | |
|---|---|---|---|---|---|---|---|---|---|
| CE: Comparative Example EX: Example | | | | | | | | | |

In each of Examples 7 to 12, both the evaluation on slipping off of dried spaghetti noodles and the evaluation on cooking handleability were not less than 3.0, and this demonstrates that there is practically no problem. In particular, in each of Examples 7 to 10, the evaluation on slipping off of dried spaghetti noodles was not less than 4.0. Furthermore, in each of Examples 9 and 10, both the evaluation on slipping off of dried spaghetti noodles and the evaluation on cooking handleability were not less than 4.0, and thus, the excellent results were obtained.

In contrast, in Comparative Example 3, the evaluation on cooking handleability was 2.4 while the evaluation on slipping off of dried spaghetti noodles was 4.5. This is probably because the number of the dried spaghetti noodles was so small that the spaghetti noodles moved too much in hot water during boiling of the noodles, resulting in rough surfaces of the noodles.

In Comparative Example 4, both the evaluation on slipping off of dried spaghetti noodles and the evaluation on cooking handleability were less than 3.0. This is probably because, since the total mass of the dried spaghetti noodles was 170 g, the number of the dried spaghetti noodles in the bundled pasta increased as the total mass was increased, so that some dried spaghetti noodles easily slipped off the bundled pasta and also it was difficult to stir the spaghetti noodles during boiling of the noodles.

### (Examples 13 to 18)

Bundled pasta of each of Examples 13 to 18 was produced in the same manner as Example 3 except that a die used in extrusion of the kneaded dough was changed and three grooves G were formed in the dried spaghetti noodles as shown in FIG. 6. At this time, in a cross section of the dried spaghetti noodle which cross section is perpendicular to the noodle string direction D, the area ratio A₁/A₀ of the total area A₁ of the three grooves G to the area A₀ of the cross section determined assuming that the grooves G did not exist was varied as shown in Table 3. The bundled pasta of each of Examples 13 to 18 was produced in this manner. The produced bundled pasta of each of Examples 13 to 18 was subjected to the evaluation on slipping off of dried spaghetti noodles and the evaluation on cooking handleability.

In calculation of the area ratio A₁/A₀, first, five dried spaghetti noodles were randomly pulled out from the bundled pasta, and an optical micrograph was taken for each of three different cross sections of each of the pulled dried spaghetti noodles. Next, 15 optical micrographs taken in total were subjected to image processing, whereby an area ratio A₁/A₀ was obtained for each optical micrograph, and then the area ratios A₁/A₀ of the optical micrographs were averaged. Thus, the area ratio A₁/A₀ was calculated.

### [Table 3]

**Table 3**

| | EX 3 | EX 13 | EX 14 | EX 15 | EX 16 | EX 17 | EX 18 |
|---|---|---|---|---|---|---|---|
| Length of dried spaghetti noodles (cm) | 16 | 16 | 16 | 16 | 16 | 16 | 16 |
| Total mass of dried spaghetti noodles (g) | 100 | 100 | 100 | 100 | 100 | 100 | 100 |
| Area ratio A1/A0 | 0.00 | 0.20 | 0.25 | 0.32 | 0.42 | 0.50 | 0.60 |
| Number of bundling bands | 2 | 2 | 2 | 2 | 2 | 2 | 2 |
| Distance L from an end of bundled pasta to a bundling band (cm) | 3.5 | 3.5 | 3.5 | 3.5 | 3.5 | 3.5 | 3.5 |
| Evaluation on slipping off of dried spaghetti noodles | 4.2 | 4.3 | 4.5 | 4.7 | 4.6 | 4.4 | 4.2 |
| Evaluation on cooking handleability | 4.6 | 4.6 | 4.7 | 4.7 | 4.7 | 4.6 | 4.5 |

| | | | | | | | |
|---|---|---|---|---|---|---|---|
| EX: Example | | | | | | | |

In each of Examples 13 to 18, both the evaluation on slipping off of dried spaghetti noodles and the evaluation on cooking handleability were not less than 4.0, and thus, the excellent results were obtained. In particular, in each of Examples 13 to 17, the evaluation on slipping off of dried spaghetti noodles was higher than that of Example 3.

The reason of this is probably as follows: In the case of dried spaghetti noodles provided with grooves G, the mass of each dried spaghetti noodle decreases with increasing area ratio A₁/A₀, and the number of the dried spaghetti noodles in bundled pasta increases accordingly. However, owing to the grooves G formed in the dried spaghetti noodles, a force of friction acting between the dried spaghetti noodles is increased, which minimizes slipping off of the dried spaghetti noodles from the bundled pasta. In Examples 13 to 17, probably, the thickness of the bundled pasta as a whole was in good balance with a force of friction acting between the dried spaghetti noodles, so that slipping off of the dried spaghetti noodles was particularly minimized.

### (Examples 19 to 25 and Comparative Examples 5 and 6)

Bundled pasta of each of Examples 19 to 25 and Comparative Examples 5 and 6 was produced in the same manner as Examples 3 and 7 to 12 and Comparative Examples 3 and 4 except that one bundling band was put in the middle portion of the bundled pasta as shown in FIG. 4. The bundled pasta of each of Examples 19 to 25 and Comparative Examples 5 and 6 was subjected to the evaluation on slipping off of dried spaghetti noodles and the evaluation on cooking handleability. The evaluation results are shown in Table 4 below.

### [Table 4]

**Table 4**

| | CE 5 | EX 19 | EX 20 | EX 21 | EX 22 | EX 23 | EX 24 | EX 25 | CE 6 |
|---|---|---|---|---|---|---|---|---|---|
| Length of dried spaghetti noodles (cm) | 16 | 16 | 16 | 16 | 16 | 16 | 16 | 16 | 16 |
| Total mass of dried spaghetti noodles (g) | 40 | 50 | 70 | 85 | 100 | 115 | 130 | 150 | 170 |
| Number of bundling bands | 1 | 1 | 1 | 1 | 1 | 1 | 1 | 1 | 1 |
| Evaluation on slipping off of dried spaghetti noodles | 4.3 | 4.2 | 4.0 | 3.8 | 3.7 | 3.5 | 3.2 | 3.0 | 2.5 |
| Evaluation on cooking handleability | 2.4 | 3.0 | 3.7 | 4.4 | 4.6 | 4.2 | 3.6 | 3.3 | 2.3 |

| | | | | | | | | | |
|---|---|---|---|---|---|---|---|---|---|
| CE: Comparative Example EX: Example | | | | | | | | | |

In each of Examples 19 to 25, both the evaluation on slipping off of dried spaghetti noodles and the evaluation on cooking handleability were not less than 3.0, and this demonstrates that there is practically no problem. In particular, the evaluation on slipping off of dried spaghetti noodles was not less than 4.0 in Examples 19 and 20, and the evaluation on cooking handleability was not less than 4.0 in Examples 21 to 23.

In contrast, in Comparative Example 5, the evaluation on cooking handleability was 2.4 while the evaluation on slipping off of dried spaghetti noodles was 4.3. This is probably because the number of the dried spaghetti noodles in the bundled pasta was so small that the spaghetti noodles moved too much in hot water during boiling of the noodles, resulting in rough surfaces of the noodles.

In Comparative Example 6, both the evaluation on slipping off of dried spaghetti noodles and the evaluation on cooking handleability were less than 3.0. This is probably because due to a large number of the dried spaghetti noodles, some dried spaghetti noodles easily slipped off the bundled pasta and also it was difficult to stir the spaghetti noodles during boiling of the noodles.

Examples 3 and 7 to 12 and Comparative Examples 3 and 4 shown in Table 2 are the same as Examples 19 to 25 and Comparative Examples 5 and 6 shown in Table 4 except that two bundling bands were provided on the bundled pasta of each of Examples 3 and 7 to 12 and Comparative Examples 3 and 4 while only one bundling band was provided on the bundled pasta of each of Examples 19 to 25 and Comparative Examples 5 and 6. Now, the evaluation results of Examples 3 and 7 to 12 and Comparative Examples 3 and 4 shown in Table 2 are compared to those of Examples 19 to 25 and Comparative Examples 5 and 6 shown in Table 4, and the comparison demonstrates that in the evaluation on slipping off of dried spaghetti noodles, the evaluation results of Examples 3 and 7 to 12 and Comparative Examples 3 and 4 shown in Table 2 are as a whole superior to those of Examples 19 to 25 and Comparative Examples 5 and 6 shown in Table 3.

This demonstrates that slipping off of dried spaghetti noodles is minimized in bundled pasta with two bundling bands compared to bundled pasta with only one bundling band.

### (Examples 26 to 32 and Comparative Examples 7 and 8)

Bundled pasta of each of Examples 26 to 32 and Comparative Examples 7 and 8 was produced in the same manner as Examples 3 and 7 to 12 and Comparative Examples 3 and 4 except that three bundling bands in total were put around the bundled pasta in such a manner that one bundling band was put in the middle portion of the bundled pasta and the other bundling bands were put separately at two positions each of which was away from the relevant end of the bundled pasta with a distance L of 3.0 cm as shown in FIG. 5. The bundled pasta of each of Examples 26 to 32 and Comparative Examples 7 and 8 was subjected to the evaluation on slipping off of dried spaghetti noodles and the evaluation on cooking handleability. The evaluation results are shown in Table 5 below.

### [Table 5]

**Table 5**

| | CE 7 | EX 26 | EX 27 | EX 28 | EX 29 | EX 30 | EX 31 | EX 32 | CE 8 |
|---|---|---|---|---|---|---|---|---|---|
| Length of dried spaghetti noodles (cm) | 16 | 16 | 16 | 16 | 16 | 16 | 16 | 16 | 16 |
| Total mass of dried spaghetti noodles (g) | 40 | 50 | 70 | 85 | 100 | 115 | 130 | 150 | 170 |
| Number of bundling bands | 3 | 3 | 3 | 3 | 3 | 3 | 3 | 3 | 3 |
| Distance L from an end of bundled pasta to a bundling band (cm) | 3.0 | 3.0 | 3.0 | 3.0 | 3.0 | 3.0 | 3.0 | 3.0 | 3.0 |
| Evaluation on slipping off of dried spaghetti noodles | 4.8 | 4.8 | 4.8 | 4.7 | 4.6 | 4.4 | 4.1 | 3.5 | 2.9 |
| Evaluation on cooking handleability | 2.4 | 3.0 | 3.7 | 4.4 | 4.6 | 4.2 | 3.6 | 3.3 | 2.3 |

| | | | | | | | | | |
|---|---|---|---|---|---|---|---|---|---|
| CE: Comparative Example EX: Example | | | | | | | | | |

In each of Examples 26 to 32, both the evaluation on slipping off of dried spaghetti noodles and the evaluation on cooking handleability were not less than 3.0, and this demonstrates that there is practically no problem. In particular, in each of Examples 26 to 31, the evaluation on slipping off of dried spaghetti noodles was not less than 4.0. Further, in each of Examples 28 to 30, both the evaluation on slipping off of dried spaghetti noodles and the evaluation on cooking handleability were not less than 4.0, and thus, the excellent results were obtained.

In contrast, in Comparative Example 7, the evaluation on cooking handleability was 2.4 while the evaluation on slipping off of dried spaghetti noodles was 4.8. This is probably because the number of the dried spaghetti noodles in the bundled pasta was so small that the spaghetti noodles moved too much in hot water during boiling of the noodles, resulting in rough surfaces of the noodles.

In Comparative Example 8, both the evaluation on slipping off of dried spaghetti noodles and the evaluation on cooking handleability were less than 3.0. This is probably because due to a large number of the dried spaghetti noodles, some dried spaghetti noodles easily slipped off the bundled pasta and also it was difficult to stir the spaghetti noodles during boiling of the noodles.

Examples 3 and 7 to 12 and Comparative Examples 3 and 4 shown in Table 2 are the same as Examples 26 to 32 and Comparative Examples 7 and 8 shown in Table 5 except that two bundling bands were provided on the bundled pasta of each of Examples 3 and 7 to 12 and Comparative Examples 3 and 4 while three bundling bands were provided on the bundled pasta of each of Examples 26 to 32 and Comparative Examples 7 and 8. Now, the evaluation results of Examples 3 and 7 to 12 and Comparative Examples 3 and 4 shown in Table 2 are compared to those of Examples 26 to 32 and Comparative Examples 7 and 8 shown in Table 5, and the comparison demonstrates that in the evaluation on slipping off of dried spaghetti noodles, the evaluation results of Examples 26 to 32 and Comparative Examples 7 and 8 shown in Table 5 are as a whole superior to those of Examples 3 and 7 to 12 and Comparative Examples 3 and 4 shown in Table 2.

This demonstrates that slipping off of dried spaghetti noodles is minimized in bundled pasta with three bundling bands compared to bundled pasta with two bundling bands.

### REFERENCE SIGNS LIST

1 bundled pasta; 11, 21 dried spaghetti noodle; 12 bundling band; D noodle string direction; G groove; L distance; W width.

## Claims

1. Bundled pasta comprising:
a plurality of dried spaghetti noodles each having a diameter of not less than 1.0 mm and not more than 3.0 mm and a length of not less than 12 cm and not more than 20 cm; and
at least one bundling band used to bundle the plurality of dried spaghetti noodles,
wherein a total mass of the plurality of dried spaghetti noodles bundled with the at least one bundling band is not less than 50 g and not more than 150 g.

2. The bundled pasta according to claim 1,
wherein the number of the at least one bundling band is two or three.

3. The bundled pasta according to claim 1 or 2,
wherein the length of the plurality of dried spaghetti noodles is not less than 14 cm and not more than 19 cm.

4. The bundled pasta according to any one of claims 1 to 3,
wherein the total mass of the plurality of dried spaghetti noodles is not less than 70 g and not more than 130 g.

5. The bundled pasta according to claim 4,
wherein the total mass of the plurality of dried spaghetti noodles is not less than 85 g and not more than 115 g.

6. The bundled pasta according to any one of claims 1 to 5,
wherein a cross section of each of the plurality of dried spaghetti noodles has a circular or elliptical main profile, the cross section being perpendicular to a noodle string direction of the plurality of dried spaghetti noodles.

7. The bundled pasta according to any one of claims 1 to 6,
wherein each of the plurality of dried spaghetti noodles has at least one groove extending along its noodle string direction.

8. The bundled pasta according to claim 7,
wherein in a cross section of each of the plurality of dried spaghetti noodles which cross section is perpendicular to the noodle string direction of the plurality of dried spaghetti noodles, an area ratio A₁/A₀ of a total area A₁ of the at least one groove to the area A₀ of the cross section which is determined assuming that the at least one groove does not exist is not less than 0.25 and not more than 0.50.

9. The bundled pasta according to claim 8,
wherein the area ratio A₁/A₀ is not less than 0.32 and not more than 0.42.
